# EUROPEAN PATENT APPLICATION

(11) **EP 3 838 815 A1**
(43) Date of publication of application: **23.06.2021**
(21) Application number: 20210039.2
(22) Date of filing: 26.11.2020
(51) Int. Cl.: B65G 59/00

(54) **METHOD AND SYSTEM FOR MOVING PANELS ARRANGED IN A STACK OF PANELS**

(30) Priority: 20.12.2019 IT 201900024952
(71) Applicant: SCM Group S.p.A., 47921 Rimini (RN) (IT)
(72) Inventor: BALDAZZI, Fabrizio, 47921 RIMINI (IT)
(74) Representative: Tiburzi, Andrea

(57) **Abstract**

The present invention relates to a method for moving panels (P) arranged in a stack of elements (V) comprising at least a first panel (P), at least a second panel (P) located beneath said first panel (P), and at least one supporting element (D1) positioned beneath said at least a second panel (P); said method comprising the steps of: providing said stack of elements (V); providing a first movable gripping device (4), for gripping said at least one supporting element (D1); and gripping and moving, by means of said first gripping device (4), said at least one supporting element (D1) on which are rested said at least a first panel (P) and said at least a second panel (P). the present invention also concerns a system for moving panels (P) comprising: at least one supporting element (D1) for supporting, from below, at least a first panel (P) and at least a second panel (P) positioned between said at least one supporting element (D1) and said at least a first panel (P); and a first movable gripping device (4), configured for gripping and moving said at least one supporting element (D1) on which are rested, in use, said at least a first panel (P) and said at least a second panel (P).

## Description

The present invention relates to a method and system for moving panels arranged in a stack of panels.

In the following the description will be directed to the handling of panels arranged in a stack of panels, but it is clear that the same should not be considered limited to this specific use, since the invention can also extend to pieces having a substantially planar shape.

Various systems are known for moving panels stacked together.

However, traditional moving systems show various disadvantages and inefficiencies, mainly connected to the laboriousness and long duration of the panel moving operations.

These inefficiencies are particularly evident above all in cases where it is necessary to move certain panels arranged in stacks formed by panels that are different from each other.

In light of the above, it is therefore an object of the present invention to provide a method for moving panels arranged in a stack of panels, which allows to manage the moving of the panels in an efficient and fast manner.

Another object of the invention is to provide a method for moving panels arranged in a stack of panels, which is particularly effective especially in the cases where it is necessary to simultaneously take a plurality of panels from a stack of overlapping panels.

A further object of the invention is to provide a method for moving panels arranged in a stack of panels, which is particularly effective even in cases it is necessary to move panels arranged under a certain number of other panels in a stack formed by overlapping panels.

Another object of the invention is to provide a system for handling panels arranged in a stack of panels, which allows the handling of panels arranged in a stack formed by overlapped panels to be carried out in a simple and fast way.

It is therefore specific object of the present invention a method for moving panels arranged in a stack of elements comprising at least a first panel, at least a second panel located beneath said first panel, and at least one supporting element positioned beneath said at least a second panel; said method comprising the steps of: providing said stack of elements; providing a first movable gripping device, for gripping said at least one supporting element; and gripping and moving, by means of said first gripping device, said at least one supporting element on which are rested said at least a first panel and said at least a second panel.

Preferably according to the invention, said stack of elements also comprises at least a third panel located beneath said at least one supporting element, and in that said method also comprises the steps of: providing a second movable gripping device, for griping a single panel located at the top of said stack of elements; and gripping, by means of said second gripping device, said at least a third panel after the execution of said step of gripping and moving, by means of said first gripping device, said at least one supporting element on which are rested said at least a first panel and at least a second panel.

Further according to the invention, said second gripping device may be coupled to said first gripping device.

Advantageously according to the invention, said second gripping device may be configured for gripping, from above, a single panel positioned at the top of said stack of elements, and in that said step of gripping, by means of said second gripping device, said at least a third panel may be carried out from above.

Still according to the invention, said second gripping device may comprise at least one suction cup.

Preferably according to the invention, said step of gripping and moving, by means of said first gripping device, said at least one supporting element on which are rested said at least a first panel and said at least a second panel, is carried out by griping said at least one supporting element at two edge zones of said at least one supporting element.

Conveniently according to the invention, said first gripping device may comprise a clamp unit.

Advantageously according to the invention, said step of gripping and moving, by means of said first gripping device, said at least one supporting element on which are rested said at least a first panel and at least a second panel, may be carried out by means of shape and/or friction connection means provided in said first gripping device and/or in said at least one supporting element.

Further according to the invention, said shape connection means may comprise protrusions and/or pins provided in said gripping device and/or in said at least one supporting element.

Still according to the invention, said gripping device may be configured for gripping said at least one supporting element at two opposite edge zones of said at least one supporting element and retaining it by means of said friction connection means.

Further according to the invention, said at least one supporting element may be a panel of said stack of elements.

It is also object of the present invention a system for moving panels comprising: at least one supporting element for supporting, from below, at least a first panel and at least a second panel positioned between said at least one supporting element and said at least a first panel; and a first movable gripping device, configured for gripping and moving said at least one supporting element on which are rested, in use, said at least a first panel and said at least a second panel.

Advantageously according to the invention, said system may comprise a second movable gripping device, configured for gripping, from above, said at least a first panel.

Preferably according to the invention, said second gripping device comprises at least one suction cup.

Conveniently according to the invention, said first gripping device may comprise a clamp unit.

Further according to the invention, said system may comprise shape and/or friction connection means in said first gripping device and/or in said at least one supporting element, for allowing a connection between said first gripping device and said at least one supporting element.

Advantageously according to the invention, said shape and/or friction connection means may comprise protrusions and/or pins provided in said gripping device and/or in said at least one supporting element.

Still according to the invention, said first gripping device may be configured for gripping said at least one supporting element at two opposite edge zones of said at least one supporting element and retaining it by means of said friction connection means.

Further according to the invention, said at least one supporting element may be a panel of said stack of elements.

The present invention will be now described, for illustrative but not limitative purposes, according to its preferred embodiments, with particular reference to the figures of the enclosed drawings, wherein:
figure 1 shows a first step of a method according to the present invention, for moving panels arranged in a stack of panels;
figure 2 shows a second step of a method according to the present invention, for moving panels arranged in a stack of panels;
figure 3 shows a third step of a method according to the present invention, for moving panels arranged in a stack of panels;
figure 4 shows a fourth step of a method according to the present invention, for moving panels arranged in a stack of panels; is
figure 5 shows a fifth step of a method according to the present invention, for handling panels arranged in a stack of panels.

In the various figures, similar parts will be indicated by the same reference numbers.

With reference to the attached figures, the numerical reference 1 indicates a pick-up device for picking up one or more panels P from a stack of elements V arranged on the ground T by means of supporting elements S and formed by a plurality of panels P spaced out with flat support elements, so as to have, arranged in a sequence on each other, a first group of panels G1 with an underlying first support element D1, a second group of panels G2 with an underlying second support element D2 , a third group of panels G3 with an underlying third support element D3, a fourth group of panels G4 with an underlying fourth support element D4, a fifth group of panels G5 with an underlying fifth support element D5, and a sixth group of panels G6 with an underlying sixth support element D6, where the first group of panels G1 is the group arranged on top of the stack of elements V, and the sixth group of panels G6 is the group positioned at the bottom of the same pile.

For example, such support elements D1, D2, D3, D4, D5, D6 can be arranged in such a way as to separate panels different in shape and/or in the materials which they are composed of.

Although the support elements D1, D2, D3, D4, D5, D6 shown in the accompanying figures have an extension surface such as to protrude laterally with respect to two opposite sides of the panels P, this shape characteristic is not, however, to be considered essential for the purposes of the present invention.

The aforementioned pick-up device 1 is movable in the space, in particular along three orthogonal axes, more particularly along a vertical axis and two horizontal axes.

Said pick-up device 1 comprises a suction cup device 2 comprising, in its turn, a plurality of suction cups 3 facing downwards to pick up, from the above, the panel P constituting the top element of the stack of elements V.

The pick-up device 1 also includes a clamp device 4 comprising two opposing jaws 5a, 5b, which can be operated by means of respective pneumatic or hydraulic pistons 6a, 6b, to laterally grip a support element D1, D2, D3, D4, D5, D6, in correspondence with two opposite lateral edges of the latter.

Specifically, interface means are provided at the gripping ends of the jaws 5a, 5b and/or the aforementioned opposite lateral edges of the support elements D1, D2, D3, D4, D5, D6, to allow the secure gripping of each element support by the clamp device 4.

In particular, said interface means can be means suitable for realizing a force coupling by means of friction or means for realizing a shape coupling, which may comprise for example protrusions and/or pins provided in the jaws 5a, 5b and/on in the support elements D1, D2, D3, D4, D5, D6 and configured to engage in corresponding cavities obtained in the support elements D1, D2, D3, D4, D5, D6 and/or in the jaws 5a, 5b, as appropriate.

The jaws 5a, 5b of the gripping device 4 can grip each support element D1, D2, D3, D4, D5, D6 in correspondence with two opposite edge areas of the latter and retain it by means of said means to achieve a coupling force through friction.

The operation of the aforementioned pick-up device 1, therefore, provides for the possibility of picking up, and possibly moving to another place, the single panel P arranged on the top of the stack of elements V by means of the suction cup device 2, bringing said pick-up device 1 above the stack of elements V, and subsequently lowering it until the aforementioned suction cups 3 adhere to the upper surface of said top panel P, thus achieving the a removable union between these elements.

Once the panel P placed on the top of the stack of elements V has been picked up according to the methods indicated above, this can possibly be transported elsewhere by moving the same pick-up device 1.

The pick-up device 1 also provides for the possibility of simultaneously picking up, and possibly moving to another place, a plurality of panels P arranged in a top area of the stack of elements V by means of a single picking-up operation carried out by means of the clamp device 4.

To perform this operation, the pick-up device 1 is brought, also in this case, over the stack of elements V, and subsequently lowered until the jaws 5a, 5b of the clamp device 4 are able to grip or engage with the lateral edges of an element of support bearing, above it, one or more panels P.

This support element and the relative panels P arranged on it can possibly be transported jointly by the same pick-up device 1 to another place and also placed on other support elements S.

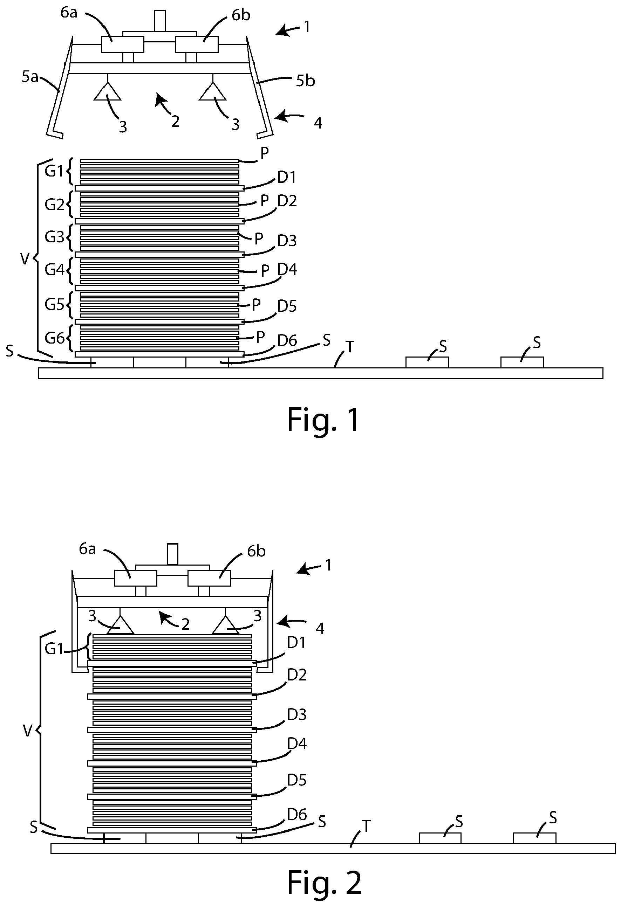

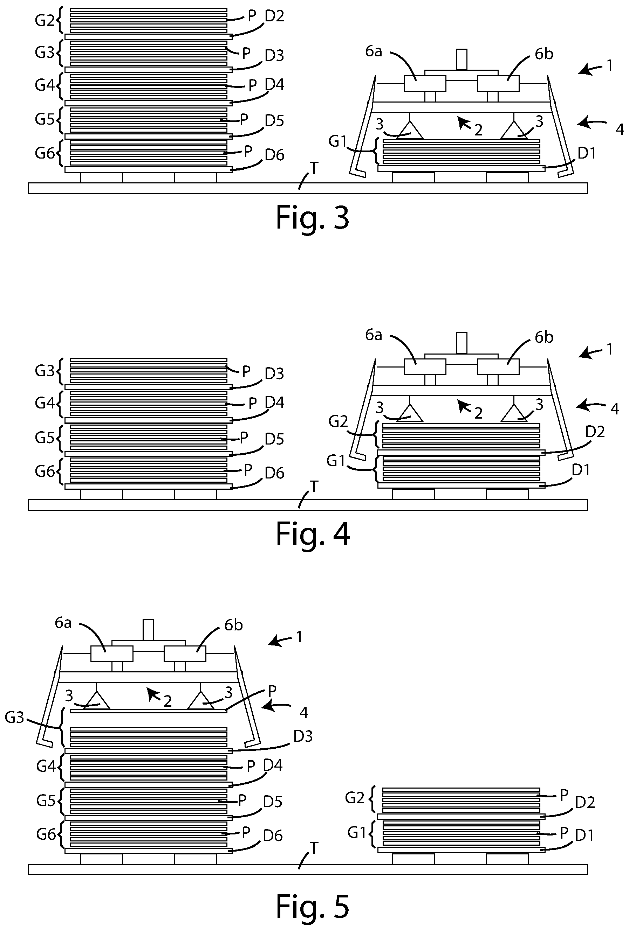

If, for example, it is intended to pick up the panel P placed on top of the third group of panels G3 from the stack of elements V, it proceeds sequentially as shown in figures 1-5, i.e., by moving the pick-up device 1 above the stack of elements V (see figure 1), taking and moving the first support element D1 and the overlying first group of panels G1 by means of the clamp device 4 (see figures 2 and 3), then taking and moving the second support element D2 and the overlying second group of panels G2 again by means of the clamp device 4 (see figure 4), and then picking up the panel P placed on top of the third group of panels G3 by means of the suction cup device 2 (see figure 5).

The first group of panels G1 and the second group of panels G2, with their respective support elements D1, D2 taken from the stack of elements V, can be moved and unloaded from the clamp device 4, in such a way as to form a further stack of elements, as shown in figures 3-5.

Although in the particular embodiment shown in the figures the suction cup device 2 and the clamp device 4 are coupled to each other, according to a variant of the invention said suction cups device 2, and clamp device 4 can be separated from each other, i.e. not to be part of a single, more complex device.

According to a further variant of the invention, at least one of the support elements D1, D2, D3, D4, D5, D6 can be a panel of the aforementioned stack V.

As can be seen from the foregoing description, the method according to the present invention allows all the operations of picking up and moving panels arranged one on top of the other in the manner of a stack to be carried out effectively, simply, and quickly.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for moving panels (P) arranged in a stack of elements (V) comprising at least a first panel (P), at least a second panel (P) located beneath said first panel (P), and at least one supporting element (D1) positioned beneath said at least a second panel (P); said method comprising the steps of:
providing said stack of elements (V);
providing a first movable gripping device (4), for gripping said at least one supporting element (D1); and
gripping and moving, by means of said first gripping device (4), said at least one supporting element (D1) on which are rested said at least a first panel (P) and said at least a second panel (P).

2. Method according to claim 1, **characterized in that** said stack of elements (V) also comprises at least a third panel (P) located beneath said at least one supporting element (D1), and **in that** said method also comprises the steps of:
providing a second movable gripping device (2), for griping a single panel (P) located at the top of said stack of elements (V); and
gripping, by means of said second gripping device (2), said at least a third panel (P) after the execution of said step of gripping and moving, by means of said first gripping device (4), said at least one supporting element (D1) on which are rested said at least a first panel (P) and at least a second panel (P).

3. Method according to claim 2, **characterized in that** said second gripping device (2) is coupled to said first gripping device (4).

4. Method according to claim 2 or 3, **characterized in that** said second gripping device (2) is configured for gripping, from above, a single panel (P) positioned at the top of said stack of elements (V), and **in that** said step of gripping, by means of said second gripping device (2), said at least a third panel (P) is carried out from above.

5. Method according to claim 3 or 4, **characterized in that** said second gripping device (2) comprises at least one suction cup (3).

6. Method according to any one of the preceding claims, **characterized in that** said step of gripping and moving, by means of said first gripping device (4), said at least one supporting element (D1) on which are rested said at least a first panel (P) and said at least a second panel (P), is carried out by griping said at least one supporting element (D1) at two edge zones of said at least one supporting element (D1).

7. Method according to any one of the preceding claims, **characterized in that** said first gripping device (4) comprises a clamp unit.

8. Method according to any one of the preceding claims, **characterized in that** said step of gripping and moving, by means of said first gripping device (4), said at least one supporting element (D1) on which are rested said at least a first panel (P) and at least a second panel (P), is carried out by means of shape and/or friction connection means provided in said first gripping device (4) and/or in said at least one supporting element (D1).

9. Method according to claim 8, **characterized in that** said shape connection means comprise protrusions and/or pins provided in said gripping device (4) and/or in said at least one supporting element (D1).

10. Method according to claim 8 or 9, **characterized in that** said gripping device (4) is configured for gripping said at least one supporting element (D1) at two opposite edge zones of said at least one supporting element (D1) and retaining it by means of said friction connection means.

11. Method according to any one of the preceding claims, **characterized in that** said at least one supporting element (D1) is a panel (P) of said stack of elements (V).

12. System for moving panels (P) comprising:
at least one supporting element (D1) for supporting, from below, at least a first panel (P) and at least a second panel (P) positioned between said at least one supporting element (D1) and said at least a first panel (P); and
a first movable gripping device (4), configured for gripping and moving said at least one supporting element (D1) on which are rested, in use, said at least a first panel (P) and said at least a second panel (P).

13. System according to claim 12, **characterized in that** it comprises a second movable gripping device (2), configured for gripping, from above, said at least a first panel (P).

14. System according to claim 13, **characterized in that** said second gripping device (2) comprises at least one suction cup.

15. System according to any one of claims 12 to 14, **characterized in that** said first gripping device (4) comprises a clamp unit.

16. System according to any one of claims 12 to 15, **characterized in that** it comprises shape and/or friction connection means in said first gripping device (4) and/or in said at least one supporting element (D1), for allowing a connection between said first gripping device (4) and said at least one supporting element (D1).

17. System according to the preceding claim, **characterized in that** said shape and/or friction connection means comprise protrusions and/or pins provided in said gripping device (4) and/or in said at least one supporting element (D1).

18. System according to any one of claims 12 to 17, **characterized in that** said first gripping device (4) is configured for gripping said at least one supporting element (D1) at two opposite edge zones of said at least one supporting element (D1) and retaining it by means of said friction connection means.

19. System according to any one of claims 12 to 18, **characterized in that** said at least one supporting element (D1) is a panel (P) of said stack of elements (V).
